# EUROPEAN PATENT APPLICATION

(11) **EP 3 885 866 A1**
(43) Date of publication of application: **29.09.2021**
(21) Application number: 19916277.7
(22) Date of filing: 28.06.2019
(51) Int. Cl.: G05D 1/02, G01C 21/00

(54) **HIGH-PRECISION LOCALIZATION METHOD AND SYSTEM BASED ON SHARED SLAM MAP**

(30) Priority: 18.02.2019 CN 201910119444
(71) Applicant: Guangzhou Xiaopeng Motors Technology Co., Ltd., Guangzhou 510640 (CN)
(72) Inventor: ZHOU, Jian, Guangzhou, Guangdong 510000 (CN); XIAO, Zhiguang, Guangzhou, Guangdong 510000 (CN); LI, Liang, Guangzhou, Guangdong 510000 (CN); LIU, Zhongyuan, Guangzhou, Guangdong 510000 (CN)
(74) Representative: Isarpatent
(86) International application number: PCT/CN2019/093533
(87) International publication number: WO 2020/168667

(57) **Abstract**

Disclosed are high-accuracy positioning method and system based on a shared SLAM map. The method comprises: acquiring, through a network, a shared SLAM map corresponding to the geographic position of a current vehicle; and determining sensor positioning information of a first sensor pose in the shared SLAM map, and determining relative positioning information of a body of the current vehicle in the shared map according to external parameters of the first sensor of the current vehicle and external parameters of a second sensor of a map-sharing vehicle. By implementing the embodiments of the present disclosure, a shared SLAM map of a current vehicle may be issued through a network or a shared SLAM map matching any geographic position of other vehicles can be acquired through the network, and the shared SLAM map is a relative coordinate map and may be a visual or laser SLAM map.

## Description

### TECHNICAL FIELD

The present disclosure relates to the technical field of vehicles, in particular to a high-accuracy positioning method and system based on a shared SLAM (Simultaneous Localization And Mapping) map.

### BACKGROUND

With the rapid development of autonomous vehicles, the positioning function has become indispensable to the autonomous vehicles. At present, the autonomous vehicles generally use the global positioning system (GPS) for positioning. However, it is realized in practice that when the autonomous vehicle is located in an underground parking lot or in a multi-storey parking lot, the current position of the autonomous vehicle determined by the GPS may correspond to multiple positions of the current parking lot, so the autonomous vehicle cannot drive to the specific position in the current parking lot according to the positioning result of the GPS, which leads to low accuracy of the positioning function of the autonomous vehicle.

### SUMMARY

The embodiments of the present disclosure disclose a high-accuracy positioning method and system based on a shared SLAM map to improve the accuracy of the positioning function of autonomous vehicles.

In a first aspect, the embodiments of the present disclosure disclose a high-accuracy positioning method based on a shared SLAM map, wherein the method comprises:
acquiring, through a network, a shared SLAM map matching the geographic position of a current vehicle;
collecting, by a first sensor of the current vehicle, a first sensor pose, and determining sensor positioning information, matching the first sensor pose, in the shared SLAM map;
acquiring external parameters of the first sensor, and reading external parameters of a second sensor of a map-sharing vehicle from the shared SLAM map, wherein the shared SLAM map is created by the map-sharing vehicle; and
determining body positioning information of the current vehicle according to the sensor positioning information, the external parameters of the first sensor and the external parameters of the second sensor.

As an optional implementation, the step of collecting, by a first sensor of the current vehicle, a first sensor pose, and determining sensor positioning information, matching the first sensor pose, in the shared SLAM map in the first aspect of the embodiments of the present disclosure comprises:
collecting, by the first sensor of the current vehicle, the first sensor pose based on the external parameters of the first sensor;
determining a target pose, corresponding to the first sensor pose, in the shared SLAM map; and
generating the sensor positioning information including the target pose, wherein the sensor positioning information matches the first sensor.

As an optional implementation, the step of acquiring external parameters of the first sensor, and reading external parameters of a second sensor of a map-sharing vehicle from the shared SLAM map in the first aspect of the embodiments of the present disclosure comprises:
acquiring current vehicle information of the current vehicle, and reading the external parameters of the first sensor from the current vehicle information;
acquiring, from the shared SLAM map, map-sharing vehicle information of the map-sharing vehicle for creating the shared SLAM map; and
reading the external parameters of the second sensor of the map-sharing vehicle from the map-sharing vehicle information.

As an optional implementation, the step of determining body positioning information of the current vehicle according to the sensor positioning information, the external parameters of the first sensor and the external parameters of the second sensor in the first aspect of the embodiments of the present disclosure comprises:
generating, by calculation, a transformation matrix between the external parameters of the first sensor and the external parameters of the second sensor;
transforming the target pose in the sensor positioning information into a second sensor pose by means of the transformation matrix;
determining current positioning information, matching the second sensor pose, in the shared SLAM map; and
determining the current positioning information as the body positioning information of the current vehicle.

As an optional implementation, the method disclosed in the first aspect of the embodiments of the present disclosure further comprises:
collecting, by a positioning module of the current vehicle, the geographic position of the current vehicle;
determining regional information corresponding to the geographic position, wherein the regional information includes the geographic position;
detecting whether the current vehicle stores a target SLAM map matching the regional information; and
if not, performing the step of acquiring, through a network, a shared SLAM map matching a geographic position of a current vehicle.

In a second aspect, the embodiments of the present disclosure disclose a high-accuracy positioning system based on a shared SLAM map, wherein the system comprises:
an acquisition unit configured for acquiring, through a network, a shared SLAM map matching a geographic position of a current vehicle;
a first collection unit configured for collecting, by a first sensor of the current vehicle, a first sensor pose, and determining sensor positioning information, matching the first sensor pose, in the shared SLAM map;
a reading unit configured for acquiring external parameters of the first sensor, and reading external parameters of a second sensor of a map-sharing vehicle from the shared SLAM map, wherein the shared SLAM map is created by the map-sharing vehicle; and
a first determining unit configured for determining body positioning information of the current vehicle according to the sensor positioning information, the external parameters of the first sensor and the external parameters of the second sensor.

As an optional implementation, in the second aspect of the embodiments of the present disclosure, the first collection unit comprises:
a collection sub-unit configured for collecting, by the first sensor of the current vehicle, the first sensor pose based on the external parameters of the first sensor;
a first determining sub-unit configured for determining a target pose, corresponding to the first sensor pose, in the shared SLAM map; and
a generation sub-unit configured for generating the sensor positioning information including the target pose, wherein the sensor positioning information matches the first sensor.

As an optional implementation, in the second aspect of the embodiments of the present disclosure, the reading unit comprises:
a first acquisition sub-unit configured for acquiring current vehicle information of the current vehicle, and reading the external parameters of the first sensor from the current vehicle information;
a second acquisition sub-unit configured for acquiring, from the shared SLAM map, map-sharing vehicle information of the map-sharing vehicle for creating the shared SLAM map; and
a reading sub-unit configured for reading the external parameters of the second sensor of the map-sharing vehicle from the map-sharing vehicle information.

As an optional implementation, in the second aspect of the embodiments of the present disclosure, the first determining unit comprises:
a calculation sub-unit configured for generating, by calculation, a transformation matrix between the external parameters of the first sensor and the external parameters of the second sensor;
a transformation sub-unit configured for transforming the target pose in the sensor positioning information into a second sensor pose by means of the transformation matrix;
a second determining sub-unit configured for determining current positioning information, matching the second sensor pose, in the shared SLAM map; and
a third determining sub-unit configured for determining the current positioning information as the body positioning information of the current vehicle.

As an optional implementation, in the second aspect of the embodiments of the present disclosure, the system further comprises:
a second collection unit configured for collecting, by a positioning module of the current vehicle, the geographic position of the current vehicle;
a second determining unit configured for determining regional information corresponding to the geographic position, wherein the regional information includes the geographic position; and
a detection unit configured for detecting whether the current vehicle stores a target SLAM map matching the regional information;
wherein, the acquisition unit is specifically configured for acquiring, through the network, the shared SLAM map corresponding to the geographic position of the current vehicle when the detection unit detects that the current vehicle does not store the target SLAM map matching the regional information.

In a third aspect, the embodiments of the present disclosure disclose a vehicle-mounted electronic device, comprising:
a memory having an executable program code stored therein; and
a processor coupled to the memory;
wherein, the processor calls the executable program code stored in the memory to perform all or part of the steps of the method mentioned in the first aspect.

In a fourth aspect, the embodiments of the present disclosure disclose a computer-readable storage medium having a program code stored therein, wherein the program code comprises an instruction for performing all or part of the steps of the method mentioned in the first aspect.

In a fifth aspect, the embodiments of the present disclosure disclose a computer program product which enables, when run on a computer, the computer to perform all or part of the steps of the method mentioned in the first aspect.

In a sixth aspect, the embodiments of the present disclosure disclose an application issue platform which is configured for issuing a computer program product, wherein the computer program product enables, when run on a computer, the computer to perform all or part of the steps of the method mentioned in the first aspect.

Compared with the prior art, the embodiments of the present disclosure have the following beneficial effects:

in the embodiments of the present disclosure, a shared SLAM map matching the geographic position of a current vehicle is acquired through a network; a first sensor pose is collected by a first sensor of the current vehicle, and sensor positioning information matching the first sensor pose is determined in the shared SLAM map; external parameters of the first sensor are acquired, and external parameters of a second sensor of a map-sharing vehicle are read from the shared SLAM map, wherein the shared SLAM map is created by the map-sharing vehicle; and body positioning information of the current vehicle is determined according to the sensor positioning information, the external parameters of the first sensor and the external parameters of the second sensor. In this way, by implementing the embodiments of the present disclosure, the shared SLAM map of any geographic position uploaded to the network by other vehicles can be acquired through the network, the sensor pose of the current vehicle can be acquired by the sensor to allow the current vehicle to determine unique positioning information, corresponding to the sensor pose, in the shared SLAM map, and thus, the accuracy of the positioning function of the vehicle is improved.

### BRIEF DESCRIPTION OF THE DRAWINGS

To more clearly explain the technical solutions of the embodiments of the present disclosure, drawings configured for describing the embodiments of the present disclosure will be briefly introduced below. Obviously, the drawings in the following description merely illustrate some embodiments of the present disclosure, and those ordinarily skilled in the art can obtain other drawings according to the following ones without creative labor.
FIG. 1 is a flow chart of a high-accuracy positioning method based on a shared SLAM map according to one embodiment of the present disclosure;
FIG. 2 is a flow chart of a high-accuracy positioning method based on a shared SLAM map according to another embodiment of the present disclosure;
FIG. 3 is a flow chart of a high-accuracy positioning method based on a shared SLAM map according to still another embodiment of the present disclosure;
FIG. 4 is a schematic diagram of a high-accuracy positioning system based on a shared SLAM map according to one embodiment of the present disclosure;
FIG. 5 is a schematic diagram of a high-accuracy positioning system based on a shared SLAM map according to another embodiment of the present disclosure;
FIG. 6 is a schematic diagram of a high-accuracy positioning system based on a shared SLAM map according to still another embodiment of the present disclosure;
FIG. 7 is a structural diagram of a vehicle-mounted electronic device according to one embodiment of the present disclosure.

### DETAILED DESCRIPTION

The technical solutions of the embodiments of the present disclosure will be clearly and completely described below in conjunction with the accompanying drawings of the embodiments. Obviously, the embodiments in the following description are merely illustrative ones, and are not all possible ones of the present disclosure. All other embodiments obtained by those ordinarily skilled in the art according to the following ones without creative labor should also fall within the protection scope of the present disclosure.

It should be noted that terms such as "comprise" and "provided with" and any transformations thereof in the embodiments and accompanying drawings of the present disclosure are intended to refer to non-exclusive inclusion. For example, a process, method, system, product or device including a series of steps or units will not be limited to the steps or units listed, or may also comprise steps or units that are not listed, or other intrinsic steps or units of the process, method, product or device.

The embodiments of the present disclosure disclose a high-accuracy positioning method and system based on a shared SLAM map, which can acquire the shared SLAM map through a network to allow a current vehicle to determine unique positioning information, corresponding to a sensor pose, in the shared SLAM map, thus improving the accuracy of the positioning function of the vehicle. The high-accuracy positioning method and system based on a shared SLAM map will be described in detail below.

### Embodiment 1

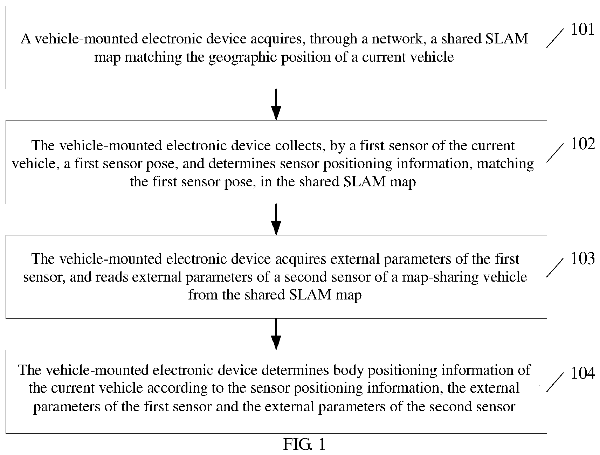

Please refer to FIG. 1 which is a flow chart of a high-accuracy positioning method based on a shared SLAM map according to one embodiment of the present disclosure. As shown in FIG. 1, the high-accuracy positioning method based on a shared SLAM map may comprise the following steps:
101: a vehicle-mounted electronic device acquires, through a network, a shared SLAM map matching the geographic position of a current vehicle.

In this embodiment of the present disclosure, the current vehicle can collect its geographic position by means of the GPS; however, due to the fact that the positioning accuracy of the GPS is low and cross-storey positioning in multi-storey buildings cannot be realized by the GPS, the current vehicle has to acquire a SLAM map corresponding to this geographic position, wherein the SLAM map is a visual SLAM map or a laser SLAM map and is a high-accuracy map that can realize high-accuracy positioning; moreover, the SLAM map may include environmental information of different locations acquired by sensors and spatial information of different geographic positions, so that unique positioning information can be determined in the SLAM map according to the spatial information, acquired by a sensor of the current vehicle, of the environment where the current vehicle is located, so as to realize accurate cross-storey positioning of the vehicle in a in multi-storey building based on the SLAM map. In addition, the vehicle-mounted electronic device may be a control terminal disposed in the current vehicle, and the owner of the current vehicle controls the current vehicle by means of the vehicle-mounted electronic device.

In this embodiment of the present disclosure, one or more SLAM maps may be pre-stored in the current vehicle, and the number of SLAM maps stored in the current vehicle is not limited. If a target SLAM map corresponding to the geographic position of the current vehicle is stored in the current vehicle, the target SLAM map can be directly used to position the current vehicle. If the target SLAM map corresponding to the geographic position of the current vehicle is stored in the current vehicle, the current vehicle acquires a shared SLAM map matching the geographic position through a network (such as the Internet or a local area network), and then the current vehicle is positioned according to the shared SLAM map acquired.

In this embodiment of the present disclosure, the current vehicle pre-stores the SLAM map in the following manner: if the current vehicle travels to a geographic position for the first time and cannot acquire a corresponding SLAM map through the network, the current vehicle collects environmental information around through a sensor (such as a visual sensor or a laser sensor) on the vehicle, and then a SLAM map is created according to the environmental information collected by the sensor, wherein the coverage of the SLAM may be preset; the current vehicle associates the created SLAM map with the current geographic position and stores the SLAM map, so that the vehicle can directly acquire the SLAM map for positioning when passing through the geographic position again. In this way, the positioning accuracy of the vehicle is improved, and the positioning speed of the vehicle is increased.

In this embodiment of the present disclosure, after a SLAM map is created by a map-sharing vehicle according to the shared SLAM map acquired by the current vehicle the through the network, the SLAM map is associated with the geographic position of the map-sharing vehicle and is stored in a server (such as a cloud server), so that other vehicles can acquire the shared SLAM map matching the geographic position from the server through the network when traveling to this geographic position, and inaccurate positioning caused by the lack of the SLAM map matching this geographic position in the current vehicle is avoided.

In this embodiment of the present disclosure, due to the fact that the model of the map-sharing vehicle may be different from the model of the current vehicle, external parameters of a sensor on the map-sharing sensor may be different from external parameters of the sensor of the current vehicle. So, to ensure that any vehicles can use the shared SLAM map shared by the map-sharing vehicle, vehicle information of the map-sharing vehicle for creating the shared SLAM map may be stored in the shared SLAM map, wherein the vehicle information may include the model of the map-sharing vehicle, the external parameters of the sensor, parameters of an inertial measurement unit (IMU), and the like, and the embodiments of the present disclosure have no limitation in this aspect.

102: the vehicle-mounted electronic device collects, by a first sensor of the current vehicle, a first sensor pose, and determines sensor positioning information, matching the first sensor pose, in the shared SLAM map.

In this embodiment of the present disclosure, the first sensor may be a visual sensor or a laser sensor disposed on the current vehicle, and the visual sensor may be a camera lens or a camera disposed on the current vehicle. The first sensor may be disposed in front of the current vehicle or at the top of the current vehicle. The current vehicle can collect the sensor pose, namely the first sensor pose, all the time by the first sensor in the traveling process. A pose identical with the first sensor pose acquired by the current vehicle can be found in the shared SLAM map, so that the vehicle-mounted electronic device can determine a target pose, matching the first sensor pose, in the shared SLAM map and then determines positional information, corresponding to the target pose, in the shared SLAM map, and the positional information corresponding to the target pose is determined as the sensor positioning information.

103: the vehicle-mounted electronic device acquires external parameters of the first sensor and reads external parameters of a second sensor of the map-sharing vehicle from the shared SLAM map, wherein the SLAM map is created by the map-sharing vehicle.

In this embodiment of the present disclosure, the external parameters of the first sensor of the current vehicle with respect to a vehicle body can be determined before the current vehicle starts to travel. The vehicle-mounted electronic device can acquire the vehicle information of the map-sharing vehicle for creating the shared SLAM map from the shared SLAM map and can determine shared external parameters of the sensor of the map-sharing vehicle from the vehicle information.

104: the vehicle-mounted electronic device determines the body positioning information of the current vehicle according to the sensor positioning information, the external parameters of the first sensor and the external parameters of the second sensor.

In this embodiment of the present disclosure, the vehicle-mounted electronic device can obtain, by calculation, a current transformation matrix for transforming the external parameters of the first sensor to the shared external parameters of the shared sensor according to the external parameters of the first sensor and the external parameters of the shared sensor and then transform the target pose, identical with the first sensor pose, in the sensor positioning information into a second sensor pose by means of the current transformation matrix, wherein the second sensor pose is a pose in the shared SLAM map; the vehicle-mounted electronic device can determine positional information, corresponding to the second sensor pose, in the shared SLAM map, and the positional information corresponding to the second sensor pose may be regarded as the body positioning information of the current vehicle.

According to the method described in FIG. 1, the shared SLAM map can be acquired through the network, and the current vehicle can determine unique positioning information, corresponding to the sensor pose, in the shared SLAM map, so that the accuracy of the positioning function of the vehicle is improved. In addition, the method in FIG. 1 not only improves the positioning accuracy of the vehicle, but also increases the positioning speed of the vehicle.

### Embodiment 2

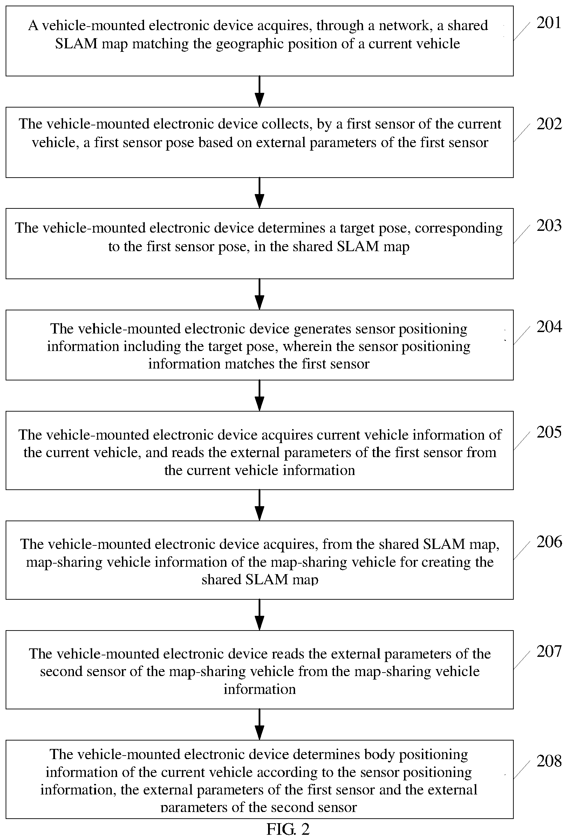

Please refer to FIG. 2 which is a flow chart of a high-accuracy positioning method based on a shared SLAM map according to another embodiment of the present disclosure. Compared with Embodiment 1, this embodiment of the present disclosure additionally provides a method for determining the sensor positioning information, corresponding to the first sensor pose, in the shared SLAM map, and describes, in further detail, a method for acquiring the external parameters of the second sensor of the map-sharing vehicle for creating the shared SLAM map, so that the positioning accuracy based on the shared SLAM map is improved, and the external parameters of the second sensor are accurately acquired from the shared SLAM map. As shown in FIG. 2, the high-accuracy positioning method based on a shared SLAM map may comprise the following steps:
201: a vehicle-mounted electronic device acquires, through a network, a shared SLAM map matching the geographic position of a current vehicle.
202: the vehicle-mounted electronic device collects, by a first sensor of the current vehicle, a first sensor pose based on external parameters of the first sensor.

In this embodiment of the present disclosure, the first sensor of the current vehicle may be a visual sensor or a laser sensor and can record the first sensor pose. Because the shared SLAM map is created according to sensor poses collected by a second sensor and body poses collected by a speedometer, the external parameters of the first sensor of the current vehicle with respect to the body of the current vehicle need to be acquired to determine the relationship between the first sensor pose collected by the first sensor and the body of the current vehicle according to the external parameters of the first sensor. The external parameters of the first sensor may include six degrees of freedom, which may be obtained based on a first sensor coordinate system of the first sensor, the first sensor is taken as an origin of the first sensor coordinate system, the travel direction of the current vehicle is taken as an x-axis of the first sensor coordinate system, the left side of the advance direction of the current vehicle is taken as a y-axis of the first sensor coordinate system, the direction perpendicular to the horizontal plane is taken as a z-direction, and the first sensor coordinate system may also include a heading angle α, a roll angle β and a pitch angle γ of the current vehicle, so x, y, z, α, β and γ are the six degrees of freedom of the external parameters of the first sensor.

203, the vehicle-mounted electronic device determines a target pose, corresponding to the first sensor pose, in the shared SLAM map.

In this embodiment of the present disclosure, because the first sensor pose is collected by the first sensor and the shared SLAM map is created by the sensor of the map-sharing vehicle, the vehicle-mounted electronic device can determine the target pose, corresponding to the first sensor pose, in the shared SLAM map.

204: the vehicle-mounted electronic device generates sensor positioning information including the target pose, wherein the sensor positioning information matches the first sensor.

In this embodiment of the present disclosure, the target pose in the shared SLAM map corresponds to target positioning information of the map-sharing vehicle, and the vehicle-mounted electronic device generates the sensor positioning information including the target positioning information.

In this embodiment of the present disclosure, by performing Steps 202-204, the target pose corresponding to the first sensor pose is determined in the shared SLAM map, and the geographic position corresponding to the target pose is determined in the shared SLAM map and is regarded as a pose, corresponding to the first sensor pose, in the shared SLAM map, so the pose currently collected by the first sensor can be associated with the shared SLAM map to allow the vehicle-mounted electronic device to determine the position, corresponding to the first sensor pose, in the SLAM map.

205: the vehicle-mounted electronic device acquires current vehicle information of the current vehicle and reads the external parameters of the first sensor from the current vehicle information.

In this embodiment of the present disclosure, the current vehicle information of the current vehicle may include various parameter information of the vehicle such as the model of the vehicle and information of devices disposed on the vehicle, so the current vehicle information may include the external parameters of the first sensor disposed on the current vehicle.

206: the vehicle-mounted electronic device acquires, from the shared SLAM map, map-sharing vehicle information of the map-sharing vehicle for creating the shared SLAM map.

In this embodiment of the present disclosure, when creating the shared SLAM map, the map-sharing vehicle needs to establish a coordinate system for creating the shared SLAM map according to the second sensor thereof. Because the shared SLAM map is created according to images collected by the second sensor and the second sensor collects images in the second coordinate system established according to the external parameters of the second sensor, it can be considered that images for creating the shared SLAM map are obtained based on the second coordinate system of the second sensor.

207: the vehicle-mounted electronic device reads the external parameters of the second sensor of the map-sharing vehicle from the map-sharing vehicle information.

In this embodiment of the present disclosure, according to Steps 205-207, because the shared SLAM map is created by the map-sharing vehicle and the external parameters of visual sensors of different vehicles may be different, the map-sharing vehicle can add the external parameters of the second sensor thereof to map-sharing vehicle information of the shared SLAM map when creating the shared SLAM map, so that the vehicle using the shared SLAM map can acquire the external parameters of the second sensor of the map-sharing vehicle from the map-sharing vehicle information and then accurately transform the sensor pose of the first sensor acquired by the current vehicle to the shared SLAM map according to the external parameters of the second sensor, thus improving the positioning accuracy based on the shared SLAM map.

208: the vehicle-mounted electronic device determines body positioning information of the current vehicle according to the sensor positioning information, the external parameters of the first sensor and the external parameters of the second sensor.

According to the method described in FIG. 2, the shared SLAM map can be acquired through the network, and the current vehicle can determine unique positioning information, corresponding to the sensor, in the shared SLAM map, so that the accuracy of the positioning function of the vehicle is improved. In addition, according to the method in FIG. 2, the position of the first sensor pose can be determined in the shared SLAM map, so that the positioning accuracy based on the shared SLAM map is improved.

### Embodiment 3

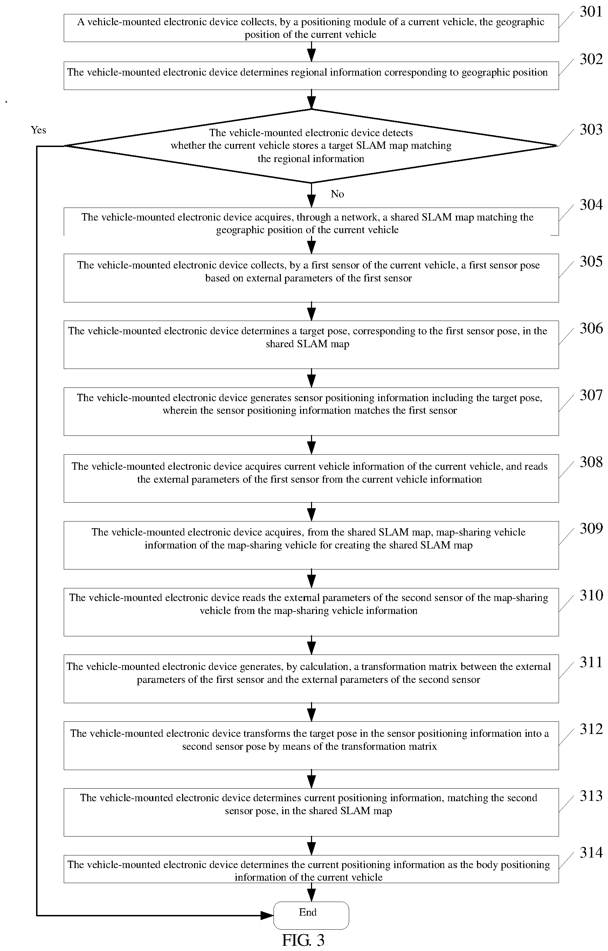

Please refer to FIG. 3 which is a flow chart of a high-accuracy positioning method based on a shared SLAM map according to another embodiment of the present disclosure. Compared with Embodiment 1 and Embodiment 2, this embodiment of the present disclosure further describes a method for carrying out positioning in a shared SLAM map by means of the first sensor pose based on a transformation matrix and enriches the methods for acquiring the shared SLAM map, so that the positioning accuracy of a vehicle can be improved, and the shared SLAM map currently required by the vehicle can be accurately acquired. As shown in FIG. 3, the high-accuracy positioning method based on a shared SLAM map may comprise the following steps:
301: a vehicle-mounted electronic device collected, by a positioning module of a current vehicle, the geographical position of the current vehicle.

In this embodiment of the present disclosure, the positioning module of the current vehicle may include a GPS positioning device, so that the vehicle-mounted electronic device can position the current vehicle by means of the GPS positioning device to obtain its geographical position when not acquiring a SLAM map, wherein the geographical position is expressed as GPS information. In this way, the current vehicle can still be positioned when not acquiring a SLAM map, and the positioning comprehensiveness of the vehicle is guaranteed.

302: the vehicle-mounted electronic device determines regional information corresponding to the geographical position, wherein the regional information includes the geographical position.

In this embodiment of the present disclosure, the vehicle-mounted electronic device can preset a plurality of regions, determine the coverage of each region in advance, and set geographical positions in each region, so it can determine regional information matching any one geographical position according to the coverage of the regions. In addition, the SLAM map may be created based on the coverage of the regions, so the vehicle-mounted electronic device can acquire a SLAM map within a certain range near the current geographical position, and comprehensive positioning is guaranteed based on the SLAM map.

303: the vehicle-mounted electronic device detects whether the current vehicle stores a target SLAM map matching the regional information; if yes, this process is ended; or, if not, Steps 304-314 are performed.

As an optional implementation, if the current vehicle stores a target SLAM matching the regional information, the following steps may be performed:
The vehicle-mounted electronic device acquires a pre-stored target SLAM map;
The vehicle-mounted electronic device collects a current sensor pose by a first sensor of the current vehicle;
The vehicle-mounted electronic device determines current positioning information, matching the current sensor pose, in the target SLAM map.

In this way, the target SLAM map pre-stored in the vehicle-mounted electronic device can be acquired directly, and the vehicle-mounted electronic device can determine the positioning information of the vehicle in the target SLAM map according to the current sensor pose acquired by the first sensor, so that the acquisition process of the SLAM map is simplified, and the positioning speed of the vehicle in the SLAM map is increased.

According to Steps 301-303 in this embodiment of the present disclosure, because the SLAM map may include paths, buildings or other contents in a region, the vehicle can determine the region where it is located according to a current rough geographic position (such as GPS positioning information) and can acquire the SLAM map of this region, and then the vehicle can be accurately positioned according to the SLAM map of this region.
304: the vehicle-mounted electronic device acquires, through a network, a shared SLAM map matching the geographic position of the current vehicle.
305: the vehicle-mounted electronic device collects, by the first sensor of the current vehicle, a first sensor pose based on external parameters of the first sensor.
306: the vehicle-mounted electronic device determines a target pose, corresponding to the first sensor pose, in the shared SLAM map.
307: the vehicle-mounted electronic device generates sensor positioning information including the target pose, wherein the sensor positioning information matches the first sensor.
308: the vehicle-mounted electronic device acquires current vehicle information of the current vehicle and reads the external parameters of the first sensor from the current vehicle information.
309: the vehicle-mounted electronic device acquires, from the shared SLAM map, map-sharing vehicle information of a map-sharing vehicle for creating the SLAM map.
310: the vehicle-mounted electronic device reads external parameters of a second sensor of the map-sharing vehicle from the map-sharing vehicle information.
311: the vehicle-mounted electronic device generates, by calculation, a transformation matrix between the external parameters of the first sensor and the external parameters of the second sensor.

As an optional implementation, the vehicle-mounted electronic device generates, by calculation, the transformation matrix between the external parameters of the first sensor and the external parameters of the second sensor through the following steps:

The vehicle-mounted electronic device generates a first transformation matrix between the first sensor of the current vehicle and the body of the current vehicle according to the external parameters of the first sensor, and the first transformation matrix is configured for transforming the first sensor pose, in a first sensor coordinate system, collected by the first sensor to a first body coordinate system of the body of the current vehicle;

The vehicle-mounted electronic device generates a second transformation matrix between the second sensor of the map-sharing vehicle and the body of the map-sharing vehicle according to the external parameters of the second sensor, and the second transformation matrix is configured for transforming the second sensor pose, in a second sensor coordinate system, collected by the second sensor to a second body coordinate system of the body of the map-sharing vehicle;

The vehicle-mounted electronic device multiplies an inverse matrix of the first transformation matrix by the second transformation matrix to obtain a transformation matrix between the external parameters of the first sensor and the external parameters of the second sensor.

In this way, the first transformation matrix and the second transformation matrix can be generated according to the external parameters of the first sensor and the external parameters of the second sensor, and the reverse matrix of the first transformation matrix is multiplied by the second transformation matrix to obtain the transformation matrix between the external parameters of the first sensor and the external parameters of the second sensor, so that the first sensor pose collected by the first sensor of the vehicle can be transformed to the shared SLAM map created by the map-sharing vehicle through the transformation matrix, and the transformation accuracy of the first sensor pose is improved.

312: the vehicle-mounted electronic device transforms the target pose in the sensor positioning information into the second sensor pose by means of the transformation matrix.

In this embodiment of the present disclosure, the target pose can be regarded as a pose, based on the external parameters of the first sensor of the current vehicle, in the shared SLAM map, the second sensor pose transformed from the target pose by means of the transformation matrix can be regarded as a pose, based on the external parameters of the second sensor of the map-sharing vehicle, in the shared SLAM map, that is, the external parameters of the first sensor of the current vehicle are transformed into the external parameters of the second sensor of the map-sharing vehicle for creating the shared SLAM map, so that positioning information, corresponding to the second sensor pose, in the shared SLAM map can be construed as positioning information of the current body of the current vehicle.
313: the vehicle-mounted electronic device determines current positioning information, matching the second sensor pose, in the shared SLAM map.
314: the vehicle-mounted electronic device determines the current positioning information as the body positioning information of the current vehicles.

In this embodiment of the present disclosure, by performing Steps 311-314, the first visual sensor pose based on the external parameters of the first sensor is transformed into the second visual sensor pose based on the external parameters of the second sensor by means of the transformation matrix, and then the second visual sensor pose based on the external parameters of the second sensor can be accurately positioned in the shared SLAM map, so that the positioning accuracy is improved.

According to the method described in FIG. 3, the shared SLAM map can be acquired through the network, and the current vehicle can determines unique positioning information, corresponding to the sensor pose, in the shared SLAM map, so that the accuracy of the positioning function of the vehicle is improved. In addition, the method described in FIG. 3 simplifies the acquisition process of the SLAM map and increases the positioning speed of the vehicle in the SLAM map. Moreover, through the method described in FIG. 3, the vehicle can be accurately positioned according to the SLAM map in the corresponding region. Furthermore, the method described in FIG. 3 improves the transformation accuracy of the first sensor pose and improves the positioning accuracy.

### Embodiment 4

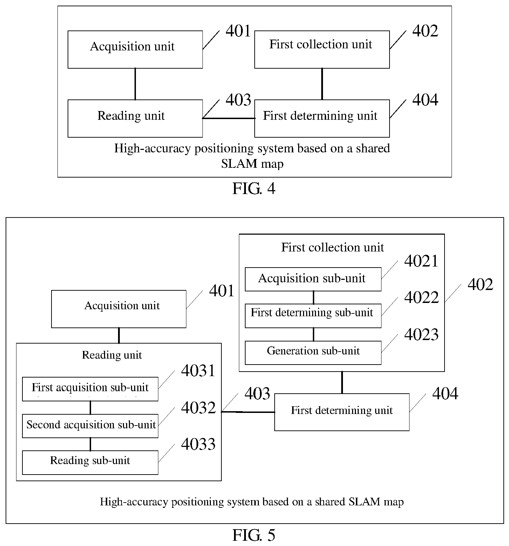

Please refer to FIG. 4 which is a structural diagram of a high-accuracy positioning system based on a shared SLAM map according to one embodiment of the present disclosure. As shown in FIG. 4, the high-accuracy positioning system based on a shared SLAM map may comprise:
An acquisition unit 401 configured for acquiring, through a network, a shared SLAM map matching a geographic position of a current vehicle;
A first collection unit 402 configured for collecting, by a first sensor of the current vehicle, a first sensor pose, and determining sensor positioning information, matching the first sensor pose, in the shared SLAM;
A reading unit 403 configured for acquiring external parameters of the first sensor, and reading external parameters of a second sensor of a map-sharing vehicle from the shared SLAM map, wherein the shared SLAM map is created by the map-sharing vehicle; and
A first determining unit 404 configured for determining body positioning information of the current vehicle according to the sensor positioning information, the external parameters of the first sensor and the external parameters of the second sensor.

According to the system shown in FIG. 4, the shared SLAM map can be acquired through the network, and the current vehicle can determine unique positioning information, corresponding to the sensor pose, in the shared SLAM map, so that the accuracy of the positioning function of the vehicle is improved. In addition, the system shown in FIG. 4 not only improves the positioning accuracy of the vehicle, but also increases the positioning speed of the vehicle.

### Embodiment 5

Please refer to FIG. 5 which is a schematic diagram of a high-accuracy positioning system based on a shared SLAM map according to another embodiment of the present disclosure. Wherein, the high-accuracy positioning system based on a shared SLAM map in FIG. 5 is obtained by optimizing the high-accuracy positioning system based on a shared SLAM map in FIG. 4. Compared with the high-accuracy positioning system based on a shared SLAM map in FIG. 4, the high-accuracy positioning system based on a shared SLAM map in FIG. 5 provides a method for determining the sensor positioning information, corresponding to the first sensor pose, in the shared SLAM map, and describes, in further detail, a method for acquiring the external parameters of the second sensor of the map-sharing vehicle for creating the shared SLAM map, so that the positioning accuracy based on the shared SLAM map is improved, and the external parameters of the second sensor are accurately acquired from the shared SLAM map. As shown in FIG. 5, the first acquisition unit 402 of the high-accuracy positioning method based on a shared SLAM map may comprise:
A collection sub-unit 4021 configured for collecting, by the first sensor of the current vehicle, the first sensor pose based on the external parameters of the first sensor;
A first determining sub-unit 4022 configured for determining a target pose, corresponding to the first sensor pose, in the shared SLAM map; and
A generation sub-unit 4023 configured for generating sensor positioning information including the target pose determined by the first determining sub-unit 4022, wherein the sensor positioning information matches the first sensor.

In this embodiment of the present disclosure, the target pose corresponding to the first sensor pose is determined in the shared SLAM map, the geographic position corresponding to the target pose is determined in the shared SLAM map and is considered as a pose, corresponding to the first sensor pose, in the shared SLAM map, and the pose currently collected by the first sensor can be associated with the shared SLAM map to allow the vehicle-mounted electronic device to determine the position, corresponding to the first sensor pose, in the shared SLAM map.

As an optional implementation, the reading unit 403 of the high-accuracy positioning system based on a shared SLAM map in FIG. 5 may comprise:
A first acquisition sub-unit 4031 configured for acquiring current vehicle information of the current vehicle, and reading the external parameters of the first sensor from the current vehicle information;
A second acquisition sub-unit 4032 configured for acquiring, from the shared SLAM map, map-sharing vehicle information of the map-sharing vehicle for creating the shared SLAM map;
Specifically, in this embodiment of the present disclosure, the second acquisition sub-unit 4032 is triggered to start after the first acquisition sub-unit 4031 reads the external parameters of the first sensor from the current vehicle information.

A reading sub-unit 4033 configured for reading the external parameters of the second sensor of the map-sharing vehicle from the map-sharing vehicle information acquired by the second acquisition sub-unit 4032.

In this embodiment of the present disclosure, because the shared SLAM map is created by the map-sharing vehicle and the external parameters of visual sensors of different vehicles may be different, the map-sharing vehicle can add the external parameters of the second sensor thereof to map-sharing vehicle information of the shared SLAM map when creating the shared SLAM map, so that the vehicle using the shared SLAM map can acquire the external parameters of the second sensor of the map-sharing vehicle from the map-sharing vehicle information and then accurately transform the sensor pose of the first sensor acquired by the current vehicle to the shared SLAM map according to the external parameters of the second sensor, thus improving the positioning accuracy based on the shared SLAM map.

According to the system shown in FIG. 5, the shared SLAM map can be acquired through the network, and the current vehicle can determine unique positioning information, corresponding to the sensor, in the shared SLAM map, so that the accuracy of the positioning function of the vehicle is improved. In addition, according to the system in FIG. 2, the position of the first sensor pose can be determined in the shared SLAM map, so that the positioning accuracy based on the shared SLAM map is improved.

### Embodiment 6

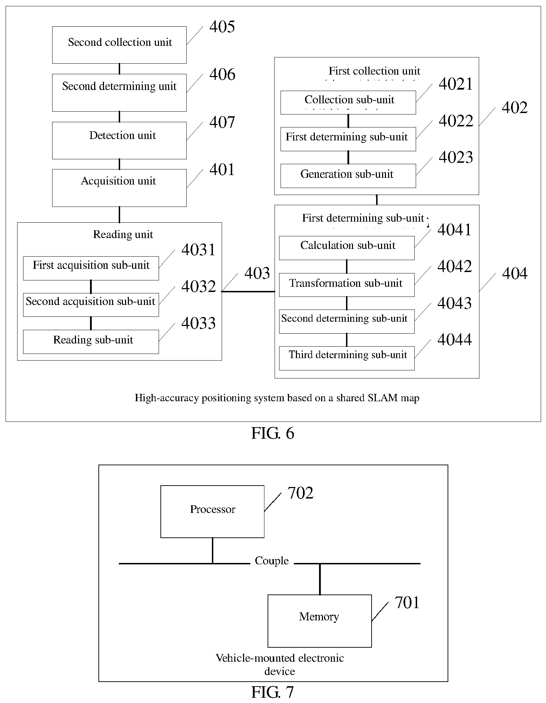

Please refer to FIG. 6 which is a structural diagram of a high-accuracy positioning system based on a shared SLAM map according to another embodiment of the present disclosure. Wherein, the high-accuracy positioning system based on a shared SLAM map in FIG. 6 is obtained by optimizing the high-accuracy positioning system based on a shared SLAM map in FIG. 5. Compared with the high-accuracy positioning system based on a shared SLAM map in FIG. 5, the high-accuracy positioning system based on a shared SLAM map in FIG. 6 further describes a method for carrying out positioning in a shared SLAM map by means of the first sensor pose based on a transformation matrix and enriches the methods for acquiring the shared SLAM map, so that the positioning accuracy of a vehicle can be improved, and the shared SLAM map currently required by the vehicle can be accurately acquired. As shown in FIG. 6, the first determining unit 404 of the high-accuracy positioning system based on a shared SLAM map may comprise:
A calculation sub-unit 4041 configured for generating, by calculation, a transformation matrix between the external parameters of the first sensor and the external parameters of the second sensor;
A transformation sub-unit 4042 configured for transforming the target pose in the sensor positioning information into a second sensor pose by means of the transformation matrix;
A second determining sub-unit 4043 configured for determining current positioning information, matching the second sensor pose, in the shared SLAM map; and
A third determining sub-unit 4044 configured for determining the current positioning information as the body positioning information of the current vehicle.

In this way, the first visual sensor pose based on the external parameters of the first sensor is transformed into the second visual sensor pose based on the external parameters of the second sensor by means of the transformation matrix, and then the second visual sensor pose based on the external parameters of the second sensor can be accurately positioned in the shared SLAM map, so that the positioning accuracy is improved.

As an optional implementation, the calculation sub-unit 4041 generates, by calculation, the transformation matrix between the external parameters of the first sensor and the external parameters of the second sensor specifically as follows:
A first transformation matrix between the first sensor of the current vehicle and the body of the current vehicle is generated according to the external parameters of the first sensor and is configured for transforming the first sensor pose, in a first sensor coordinate system, collected by the first sensor to a first body coordinate system of the body of the current vehicle;
A second transformation matrix between the second sensor of the map-sharing vehicle and the body of the map-sharing vehicle is generated according to the external parameters of the second sensor and is configured for transforming the second sensor pose, in a second sensor coordinate system, collected by the second sensor to a second body coordinate system of the body of the map-sharing vehicle;
An inverse matrix of the first transformation matrix is multiplied by the second transformation matrix to obtain a transformation matrix between the external parameters of the first sensor and the external parameters of the second sensor.

In this way, the first transformation matrix and the second transformation matrix can be generated according to the external parameters of the first sensor and the external parameters of the second sensor, and the reverse matrix of the first transformation matrix is multiplied by the second transformation matrix to obtain the transformation matrix between the external parameters of the first sensor and the external parameters of the second sensor, so that the first sensor pose collected by the first sensor of the vehicle can be transformed to the shared SLAM map created by the map-sharing vehicle through the transformation matrix, and the transformation accuracy of the first sensor pose is improved.

As an optional implementation, the high-accuracy positioning system based on a shared SLAM map in FIG. 5 may further comprise:
A second collection unit 405 configured for collecting, by a positioning module of the current vehicle, the geographic position of the current vehicle;
A second determining unit 406 configured for determining regional information corresponding to the geographic position collected by the second collection unit 405, wherein the regional information includes the geographic position; and
A detection unit 407 configured for detecting whether the current vehicle stores a target SLAM map matching the regional information determined by the second determining unit 406;
Wherein, the acquisition unit 401 is specifically configured for acquiring, through the network, the shared SLAM map matching the geographic position of the current when the detection unit 407 detects that the current vehicle does not store a target SLAM map matching the regional information.

Wherein, because the SLAM map may include paths, buildings or other contents in a region, the vehicle can determine the region where it is located according to a current rough geographic position (such as GPS positioning information) and can acquire the SLAM map of this region, and then the vehicle can be accurately positioned according to the SLAM map of this region.

As an optional implementation, the detection unit 407 may be also configured for:
Acquiring a pre-stored SLAM map when the detection unit 407 detects that the current vehicle stores a target SLAM map matching the regional information;
Collecting, by the first sensor of the current vehicle, a current sensor pose; and
Determining current positioning information, matching the current sensor pose, in the target SLAM map.

In this way, the target SLAM map pre-stored in the vehicle-mounted electronic device can be acquired directly, and the vehicle-mounted electronic device can determine the positioning information of the vehicle in the target SLAM map according to the current sensor pose acquired by the first sensor, so that the acquisition process of the SLAM map is simplified, and the positioning speed of the vehicle in the SLAM map is increased.

According to the system shown in FIG. 6, the shared SLAM map can be acquired through the network, and the current vehicle can determine unique positioning information, corresponding to the sensor pose, in the shared SLAM map, so that the accuracy of the positioning function of the vehicle is improved. In addition, the system shown in FIG. 6 simplifies the acquisition process of the SLAM map and increases the positioning speed of the vehicle in the SLAM map. Moreover, through the system shown in FIG. 6, the vehicle can be accurately positioned according to the SLAM map in the corresponding region. Furthermore, the system shown in FIG. 6 improves the transformation accuracy of the first sensor pose and improves the positioning accuracy.

### Embodiment 7

Refer to FIG. 7 which is a structural diagram of a vehicle-mounted electronic device according to one embodiment of the present disclosure. As shown in FIG. 7, the vehicle-mounted electronic device may comprise:
A memory 701 having an executable program code stored therein; and
A processor 702 coupled to the memory 701;
Wherein, the processor 702 calls the executable program code stored in the memory 701 to perform all or part of the steps of the method in the above embodiments.

One embodiment of the present disclosure further discloses computer-readable storage medium having a program code stored therein, wherein the program code comprises an instruction for performing all or part of the steps of the method in the above embodiments.

One embodiment of the present disclosure further discloses a computer program product which enables, when run on a computer, the computer to perform all or part of the steps of the method in the above embodiments.

One embodiment of the present disclosure further discloses an application issue platform which is configured for issuing a computer program product which enables, when run on a computer, the computer to perform all or part of the steps of the method in the above embodiments.

It should be noted that "one embodiment" or "an embodiment" mentioned in the whole specification means that specific features, structures or characteristics related to said embodiment is included in at least one embodiment of the present disclosure. Therefore, "in one embodiment" or "in an embodiment" in the specification does not definitely refer to the same embodiment. In addition, these features, structures or characteristics can be combined in one or more embodiments in any appropriate manners. Those skilled in the art should understand that the embodiments described in the specification are optional ones, and actions and modules involved in these optional embodiments are not definitely indispensable to the present disclosure.

It should be noted that the serial numbers of the processes in the embodiments of the present disclosure do not indicate the execution sequence of these processes, and the execution sequence of the processes depends on the function and internal logic of the processes and should not limit the implementation of the embodiments of the present disclosure in any way.

In addition, the terms "system" and "network" can be exchanged in this specification. It should be understood that the term "and/or" in this specification only describes association relationships between associated objects and may include three relationships. For example, A and/or B may indicate that only A exists, both A and B exist, or only B exists. Moreover, the character "/" in this specification generally refers to an "or" relationship between associated objects.

It should be understood that in the embodiments of the present disclosure, "B corresponding to A" indicates that B is associated with A and can be determined according to A. It should also be understood that determining B according to A does not indicate that B can be determined only according to A, but that B can be determined according to A and/or other information.

Those ordinarily skilled in the art would appreciate that all or part of the steps of the method in the above embodiments may be implemented by relevant hardware instructed by a program which is stored in a readable storage medium, which is a Read-Only Memory (ROM), a Random Access Memory (RAM), a Programmable Read-only Memory (PROM), an Erasable Programmable Read Only Memory (EPROM), a One-time Programmable Read-Only Memory (EPROM), a One-time Programmable Read-Only Memory (OTPROM), an Electrically-Erasable Programmable Read-Only Memory (EEPROM), a Compact Disc Read-Only Memory (CD-ROM), other optical disc memories, disk memories and magnetic tape memories, or any other computer-readable media for carrying or storing data.

The units described as separable components may be or may be not physically separated, and components displayed as units may be or may be not object units, that is, they may be located in the same place or be distributed in multiple network units. All or part of these units can be selected to fulfill the purposes of the solutions of the embodiments as actually needed.

In addition, the functional units in the embodiments of the present disclosure may be integrated in one processing unit or be physically separated, or two or more units may be integrated in one unit. The integrated units may be implemented in the form of hardware or in the form of software functional units.

When implemented in the form of software functional units and sold or used as independent products, the integrated units may be stored in a computer-accessible memory. On the basis of such a understanding, the technical solution of the present disclosure, or parts, making a contribution to the prior art, of the technical solution, or all or part of the technical solution may be embodied in the form of a software product which is stored in a memory comprising a plurality of requests to enable a computer device (such as a personal computer, a server or a network device, more specifically a processor in the computer device) to perform all or part of the steps of the method in the above embodiments.

The high-accuracy positioning method and system based on a shared SLAM map disclosed by the embodiments of the present disclosure have been introduced in detail above. In this specification, the principle and implementation of the present disclosure are expounded with embodiments, but the description of the above embodiments is merely for assisting those skilled in the art in understanding the method and core concept thereof of the present disclosure. Moreover, those ordinarily skilled in the art can make variations to the specific implementation and application scope based on the concept of the present disclosure. So, the contents in this specification should not be construed as limitations of the present disclosure.

## Claims

1. A high-accuracy positioning method based on a shared SLAM map, **characterized in that**, the method comprises:
acquiring, through a network, a shared SLAM map matching a geographic position of a current vehicle;
collecting, by a first sensor of the current vehicle, a first sensor pose, and determining sensor positioning information, matching the first sensor pose, in the shared SLAM map;
acquiring external parameters of the first sensor, and reading external parameters of a second sensor of a map-sharing vehicle from the shared SLAM map, wherein the shared SLAM map is created by the map-sharing vehicle; and
determining body positioning information of the current vehicle according to the sensor positioning information, the external parameters of the first sensor and the external parameters of the second sensor.

2. The method according to claim 1, **characterized in that**, the collecting, by a first sensor of the current vehicle, a first sensor pose, and determining sensor positioning information, matching the first sensor pose, in the shared SLAM map, comprises:
collecting, by the first sensor of the current vehicle, the first sensor pose based on the external parameters of the first sensor;
determining a target pose, corresponding to the first sensor pose, in the shared SLAM map; and
generating the sensor positioning information including the target pose, wherein the sensor positioning information matches the first sensor.

3. The method according to claim 2, **characterized in that**, the acquiring external parameters of the first sensor, and reading external parameters of a second sensor of a map-sharing vehicle from the shared SLAM map, comprises:
acquiring current vehicle information of the current vehicle, and reading the external parameters of the first sensor from the current vehicle information;
acquiring, from the shared SLAM map, map-sharing vehicle information of the map-sharing vehicle for creating the shared SLAM map; and
reading the external parameters of the second sensor of the map-sharing vehicle from the map-sharing vehicle information.

4. The method according to claim 3, **characterized in that**, the determining body positioning information of the current vehicle according to the sensor positioning information, the external parameters of the first sensor and the external parameters of the second sensor, comprises:
generating, by calculation, a transformation matrix between the external parameters of the first sensor and the external parameters of the second sensor;
transforming the target pose in the sensor positioning information into a second sensor pose by means of the transformation matrix;
determining current positioning information, matching the second sensor pose, in the shared SLAM map; and
determining the current positioning information as the body positioning information of the current vehicle.

5. The method according to any one of claims 1-4, **characterized in that**, the method further comprises:
collecting, by a positioning module of the current vehicle, the geographic position of the current vehicle;
determining regional information corresponding to the geographic position, wherein the regional information includes the geographic position;
detecting whether the current vehicle stores a target SLAM map matching the regional information; and
if not, performing the step of acquiring, through a network, a shared SLAM map matching a geographic position of a current vehicle.

6. A high-accuracy positioning system based on a shared SLAM map, **characterized in that**, the system comprises:
an acquisition unit configured for acquiring, through a network, a shared SLAM map matching a geographic position of a current vehicle;
a first collection unit configured for collecting, by a first sensor of the current vehicle, a first sensor pose, and determining sensor positioning information, matching the first sensor pose, in the shared SLAM map;
a reading unit configured for acquiring external parameters of the first sensor, and reading external parameters of a second sensor of a map-sharing vehicle from the shared SLAM map, wherein the shared SLAM map is created by the map-sharing vehicle; and
a first determining unit configured for determining body positioning information of the current vehicle according to the sensor positioning information, the external parameters of the first sensor and the external parameters of the second sensor.

7. The system according to claim 6, **characterized in that**, the first collection unit comprises:
a collection sub-unit configured for collecting, by the first sensor of the current vehicle, the first sensor pose based on the external parameters of the first sensor;
a first determining sub-unit configured for determining a target pose, corresponding to the first sensor pose, in the shared SLAM map; and
a generation sub-unit configured for generating the sensor positioning information including the target pose, wherein the sensor positioning information matches the first sensor.

8. The system according to claim 7, **characterized in that**, the reading unit comprises:
a first acquisition sub-unit configured for acquiring current vehicle information of the current vehicle, and reading the external parameters of the first sensor from the current vehicle information;
a second acquisition sub-unit configured for acquiring, from the shared SLAM map, map-sharing vehicle information of the map-sharing vehicle for creating the shared SLAM map; and
a reading sub-unit configured for reading the external parameters of the second sensor of the map-sharing vehicle from the map-sharing vehicle information.

9. The system according to claim 7 or 8, **characterized in that**, the first determining unit comprises:
a calculation sub-unit configured for generating, by calculation, a transformation matrix between the external parameters of the first sensor and the external parameters of the second sensor;
a transformation sub-unit configured for transforming the target pose in the sensor positioning information into a second sensor pose by means of the transformation matrix;
a second determining sub-unit configured for determining current positioning information, matching the second sensor pose, in the shared SLAM map; and
a third determining sub-unit configured for determining the current positioning information as the body positioning information of the current vehicle.

10. The system according to claim 9, **characterized in that**, the system further comprises:
a second collection unit configured for collecting, by a positioning module of the current vehicle, the geographic position of the current vehicle;
a second determining unit configured for determining regional information corresponding to the geographic position, wherein the regional information includes the geographic position; and
a detection unit configured for detecting whether the current vehicle stores a target SLAM map matching the regional information;
wherein, the acquisition unit is specifically configured for acquiring, through the network, the shared SLAM map corresponding to the geographic position of the current vehicle when the detection unit detects that the current vehicle does not store the target SLAM map matching the regional information.
